(19) Europäisches Patentamt / European Patent Office / Office européen des brevets

(11) **EP 2 712 762 B1**

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(51) Int Cl.:
*B60L 53/302* (2019.01)     *B60L 53/16* (2019.01)
*B60L 53/124* (2019.01)     *B60L 53/36* (2019.01)
*B60L 53/37* (2019.01)     *B60L 53/38* (2019.01)

(21) Anmeldenummer: **12186619.8**

(22) Anmeldetag: **28.09.2012**

(54) **Positioniersystem und Verfahren zur Positionierung eines Fahrzeuges**

Positioning system and method for positioning a vehicle

Système de positionnement et procédé de positionnement d'un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.04.2014 Patentblatt 2014/14**

(73) Patentinhaber: **Valeo Siemens eAutomotive Germany GmbH**
**91056 Erlangen (DE)**

(72) Erfinder:
• **Findeisen, Michel**
 **09306 Erlau OT Milkau (DE)**
• **Hess, Markus**
 **09465 Sehmatal-Sehma (DE)**
• **Hirtz, Gangolf, Professor**
 **96317 Kronach (DE)**
• **Knorr, Rainer**
 **93055 Regensburg (DE)**

(74) Vertreter: **Dr. Gassner & Partner mbB**
**Wetterkreuz 3**
**91058 Erlangen (DE)**

(56) Entgegenhaltungen:
WO-A1-2012/058466     WO-A2-2011/116874
DE-A1- 4 009 668     DE-A1- 4 009 668
DE-A1-102011 005 386     DE-A1-102011 109 834
DE-A1-102011 111 051     US-A1- 2010 235 006
US-A1- 2012 095 617     US-B1- 8 169 186

EP 2 712 762 B1

## EP 2 712 762 B1

**Beschreibung**

Die Erfindung betrifft ein Positioniersystem zur Positionierung eines Fahrzeuges, sowie ein Verfahren zur Positionierung des Fahrzeuges.

Die DE 10 2011 005 386 A1 offenbart ein Lademodul zur Bereitstellung elektrischer Energie für ein elektrisch betreibbares Fahrzeug, wobei eine Steuereinheit und eine bildverarbeitende Sensoren umfassende Detektoreinheit zur Ermittlung einer Parkposition des Fahrzeugs vorgesehen sind. Durch das Vorsehen der Detektoreinheit wird die Parkposition des Fahrzeugs automatisiert erkannt und in Kenntnis des Fahrzeugs oder der Fahrzeugspezifika auf die Lage eines fahrzeugseitigen Gegensteckelements geschlossen. Durch die bildverarbeitenden Sensoren wird ein Nummernschild oder eine sonstige eindeutige Kennzeichnung des Fahrzeugs erfasst und in der Steuereinheit ausgewertet.

Die DE 40 09 668 A1 offenbart ein Verfahren zum positionsgenauen Abstellen von Flugzeugen, bei der die aktuelle Position des Flugzeugs durch Auswertung eines Bilds ermittelt wird und daraus durch Vergleich mit abgespeicherten Referenzfeldern der Flugzeugtyp ermittelt und Anweisungen zur Positionskorrektur flugzeugtyp und -positionsabhängig erfolgen.

Die US 2012/0095617 A1, DE 10 2011 111 051 A1, US 8 169 186 B1, DE 10 2011 109 834 A1 und US 2010/0235006 A1 offenbaren weitere Positionierungsverfahren für Fahrzeuge bzw. induktive Ladevorrichtungen.

Die WO 2011/116874 A2 offenbart ein System zur berührungslosen Energieübertragung an ein Fahrzeug mit einem Primärleiter, der induktiv an eine Sekundärwicklung des Fahrzeugs koppelbar ist. Mittels Hilfswicklungen des Primärleiters kann das Vorhandensein von metallischen Fremdkörpern detektiert werden.

Weist ein Fahrzeug einen elektrischen Energiespeicher und einen elektrischen Energieverbraucher für einen Antrieb des Fahrzeuges auf, so ist für diesen ein Ladevorgang bzw. eine Ladevorrichtung vorzusehen. Beispiele für derartige Fahrzeuge sind Hybridfahrzeuge, Plug-In Hybridfahrzeuge, Elektrofahrzeuge ohne Verbrennungsmotor, E-LKW's, usw. Derartige Fahrzeuge sind aufgrund der sich weiter entwickelnden Mobilitätsanforderungen immer wichtiger. Dabei sind insbesondere ein geringer Energieverbrauch und geringe Emissionen vorteilhaft. Eine Komponente dieser Fahrzeuge ist der Energiespeicher. Dieser wird in vielen Fällen als Batteriespeicher ausgeführt. Auch Kondensatoren könnten eingesetzt werden. Als Batterie kommen beispielsweise NiMH und Li-Ionen Akkumulatoren zum Einsatz. Die Größe und damit die maximal gespeicherte Energiemenge derartiger Speicher hängen vom Anwendungsfall ab. Beispielhaft weisen Energiespeicher von Plug-In Hybriden für Personenkraftwagen eine Größe von bis zu 20 bis 30 kWh auf. Ist ein Personenkraftwagen ein reines Elektrofahrzeug ohne Verbrennungsmotor für den Antrieb, so kann sich die Größe des Energiespeichers zwischen 40 und ca. 50 kWh bewegen. Abhängig vom jeweiligen Anwendungsfall sind auch andere Kapazitätsgrößen für den Energiespeicher wählbar, wobei beispielsweise ein Taxi durchaus ein Bedarf von ca. 100 kWh haben kann. Im Allgemeinen beträgt derzeit die max. Reichweite von Plug-In Hybridfahrzeugen (PKW) im reinen elektrischen Betrieb ca. 50 km und die von reinen Elektrostraßenfahrzeugen (PKW) bis zu 100 bis 150 km. Danach müssen die Energiespeicher wieder aufgeladen werden. Abhängig vom Anwendungsfall, der Auslegung des Fahrzeuges und der weiteren Entwicklung der Batterietechnik, kann die Kilometerleistung erheblich von den obigen Werten abweichen.

Das Aufladen des Energiespeichers des Fahrzeuges erfolgt beispielsweise mittels eines Bordladegerätes, welches seine Energie für die Aufladung aus einem Hausnetz, Firmennetz oder aus einer öffentlichen Ladestationen bezieht. Dabei wird das Bordladegerät über ein Kabel mit dem jeweiligen Stromnetz verbunden. Durch die Verwendung eines Kabels ist eine mechanische Verbindung zwischen den beiden Komponenten, also dem Stromnetz und dem Fahrzeug mit dem elektrischen Energiespeicher herzustellen, um das Fahrzeug zu laden. Dies stellt für einen Benutzer eine Gebrauchseinschränkung und/oder eine Komforteinschränkung dar, weil dieser entweder mit dem Kabel zu hantieren hat oder auch weil ein kabelgebundenes Laden bewegte mechanische Komponenten aufweist, welche verschleißen und/oder beim Hantieren beschädigt werden können. Ist beispielsweise ein Verbindungsstecker des Kabels sehr schwer oder das Kabel sehr lang, schmutzig und/oder nass, so sinkt die Bereitschaft eines Benutzers des kabelbasierten Ladesystems das Fahrzeug zu laden. Dies reduziert auch die Akzeptanz von Fahrzeugen welche zum Antrieb des Fahrzeuges eine elektrische Maschine nutzen.

Eine Aufgabe der Erfindung ist es ein Positioniersystem und ein Verfahren zur Positionierung eines Fahrzeuges anzugeben, durch welches ein induktives Laden des Fahrzeuges optimiert ist.

Zur Lösung dieser Aufgabe werden ein Positioniersystem gemäß Anspruch 1 und ein Verfahren zum Positionieren eines Fahrzeugs gemäß Anspruch 6 vorgeschlagen. Bevorzugte Ausgestaltungen sind Gegenstand der abhängigen Ansprüche.

Wird zum Laden eines elektrischen Energiespeichers eines Fahrzeuges (also zum Laden des Fahrzeuges) ein induktives Ladesystem verwendet, so hängt der Wirkungsgrad des Ladens unter anderem von einer Positionierung der verwendeten Induktionskörper zueinander ab. Ein Induktionskörper ist beispielsweise eine Primärspule, und ein weiterer Induktionskörper ist eine Sekundärspule (das Fahrzeug weist die Sekundärspule auf). Ein induktives Laden kann mittels genau einer Primärspule und genau einer Sekundärspule, oder mittels einer Primärspule und einer Vielzahl von Sekundärspulen, oder mittels einer Vielzahl von Primärspulen und einer Sekundärspule, oder mittels einer Vielzahl

2

von Primärspulen und einer Vielzahl von Sekundärspulen erfolgen. Die jeweilige Primärspule hat zur jeweiligen Sekundärspule eine Ladeposition einzunehmen. Abhängig von der eingenommenen Position kann der Wirkungsgrad der Energieübertragung zwischen Primär- und Sekundärspule besser oder schlechter sein als bei einer anderen Position. Vorteilhaft wird die Position optimiert.

In einer Ausführungsform nimmt ein Fahrzeug (z. B. ein PKW) zum Zwecke des "Induktiven Ladens" eine bestimmte Position (x,y) innerhalb eines abgegrenzten Bereiches (z. B. Garage, Parkplatz, Stellplatz, ...) ein, bzw. fährt diese an. Diese bestimmte Position, welche durch ein im Boden eingelassenes bzw. dort fixiertes Lademodul festgelegt ist, ist statisch. Die Position, das heißt die Lage des Lademoduls in einem Koordinatensystem, insbesondere einem Weltkoordinatensystem, ist bekannt. Die Position ist also in einem Datenspeicher abgespeichert, wobei die gespeicherten Positionsdaten zur Berechnung der Position eines Fahrzeuges im Verhältnis zu diesem Lademodul verwendet werden. Mit der Position des Lademoduls ist auch die Position einer Primärspule bekannt, da diese im Lademodul positionsfest ist. Die Primärspule repräsentiert die Einheit eines Ladegerätes, welche als Leistungsmodul elektromagnetische Felder bzw. Magnetfelder generieren kann. Eine Speicherung der Position des Lademoduls bzw. der Primärspule ist gleichbedeutend. Die Positionen betreffen beispielsweise die Position in einem zweidimensionalen Koordinatensystem (x, y) oder in einem dreidimensionalen Koordinatensystem (x, y, z). Die Verwendung eines kartesischen Koordinatensystems ist vorteilhaft jedoch nicht zwingend. Um die Position des Lademoduls bzw. des Fahrzeuges bzw. des Fahrzeuges zum Lademodul mit einer entsprechenden Genauigkeit anzufahren zu können, wird in einer Ausführungsform ein Fahrer des Fahrzeuges über eine Soll- und/oder Ist-Position informiert. Hierzu ist eine Mensch-Maschine-Schnittstelle beispielsweise in Form eines Displays an einer Wand oder in dem Fahrzeug vorgesehen.

Erfindungsgemäß weist das Positioniersystems für das Laden eines Fahrzeuges eine Kamera, eine Rechnereinheit und einen Datenspeicher auf, wobei in dem Datenspeicher eine auf ein Merkmal des Fahrzeuges bezogene Information, insbesondere eine Längeninformation, gespeichert ist. Mit Hilfe eines von der Kamera aufgenommenen Bildes wird nach dem Erkennen zumindest eines Merkmales des Fahrzeuges eine Information auf Grundlage des erkannten Merkmals ermittelt und mit Hilfe der zum Fahrzeug gespeicherten Information eine Berechnung bezüglich der Position des Fahrzeuges vorgenommen.

In einer weiteren Ausgestaltung wird die Identität und/oder Typ des Fahrzeuges durch eine kamerabasierte Nummernschilderkennung erkannt. Alternativ hierzu ist es auch möglich, dass sich ein Fahrzeug über ein funktechnisches System identifiziert (z. B. mittels eines RFID-Chips). Ist das Fahrzeug identifiziert, wird auf ein in einem Datenspeicher abgelegtes Merkmal (oder eine Vielzahl von Merkmalen) zugegriffen, wobei das Merkmal zur Berechnung der Position des Fahrzeuges verwendet wird. Zu diesem Fahrzeug in einem Datenspeicher hinterlegte Daten können also zur Berechnung der Position des Fahrzeuges verwendet werden.

In einer Ausgestaltung der Positionierung kann damit ermittelt werden, ob und in welchem Maß eine Istposition des Fahrzeuges von einer für die induktive Ladung notwendigen Position (Sollposition) abweicht. Dies kann einem Fahrer angezeigt werden. Ferner kann ermittelt werden, wie der Fahrer das Fahrzeug zu bewegen hat, um die Istposition der Sollposition anzunähern. Um also eine sensorgestützte Navigation des Fahrzeuges zu ermöglichen, ist dessen Position zu bestimmen, wobei hierfür ein optischer Sensor (insbesondere eine Kamera) Verwendung findet. Die Verwendung einer Monokamera reduziert dabei den technischen Aufwand im Vergleich zur Verwendung einer Stereokamera oder einer noch größeren Anzahl von Kameras. Zur Positionsbestimmung des Fahrzeuges ist die Verwendung eines 3D-Weltkoordinaten vorteilhaft. Hierzu sind in einer Ausgestaltung markante Messpunkte (Scheinwerfer, Außenspiegel, usw.) am Fahrzeug gewählt. Dabei können beispielsweise folgende Ansätze zur Positionsbestimmung verfolgt werden:

- ein Einsatz von Stereokameras zur direkten Ermittlung der 3D Weltkoordinaten aus 2D Bildkoordinaten mit Hilfe zweier statisch gekoppelter Imager;
- ein "Structure-From-Motion" Ansatz zur indirekten Ermittlung der 3D Weltkoordinaten der Features aus der Bewegung des Fahrzeuges heraus mithilfe einer Monokamera;
- eine Ermittlung von Fußpunkten des Fahrzeuges und Berechnung der 3D Positionen dieser Punkte über Extrinsische Kalibrierung der Kamera, wobei in einer Ausgestaltung eines Verfahrens zur Positionierung eines Fahrzeuges ist eine Monokamera extrinsisch kalibriert.

In einer Ausgestaltung des Positioniersystems ist die Rechnereinheit mit einer Mensch-Maschine-Schnittstelle (auch Human Machine Interface HMI genannt) datentechnisch verbunden, wobei insbesondere die Kommunikation wie folgt erfolgt:

- per Funk;
- per Kabel; und/oder
- geräteintern, da HMI und Rechnereinheit eine Baueinheit bilden.

Eine Fusion und Kommunikation der gewonnenen Informationen bezüglich der Position und gegebenenfalls einer weiteren verbesserten Positionierung erfolgt mittels des HMI (z. B. ein Display). Die gewonnenen Informationen zur Position und Orientierung des Fahrzeuges können in Form einer GUI dem Fahrer präsentiert werden. Diese Informationen kann der Fahrer zur Korrektur der Fahrbahn des Fahrzeuges nutzen.

In einer Ausgestaltung des Positioniersystems ist in dem Datenspeicher eine Position einer ortsfesten Zieleinheit, also insbesondere des Lademoduls gespeichert, wobei das Lademodul Teil einer Ladestation zum induktiven Laden eines Energiespeichers eines Fahrzeugs ist. Da die Zieleinheit ortsfest ist kann eine Monokamera verwendet werden.

Bei einem Verfahren zum Positionieren eines Fahrzeuges für einen induktiven Ladevorgang, wird das Fahrzeug von einer Kamera, insbesondere einer Monokamera, aufgenommen, wobei ein Merkmal oder eine Vielzahl von Merkmalen, beispielsweise ein Nummernschild, ein Außenspiegel, ein Scheinwerfer des Fahrzeugs, usw. erkannt wird, wobei eine auf das Merkmal bezogene Position des Fahrzeuges berechnet wird. Um die Genauigkeit zu verbessern können zwei voneinander weit entfernte Merkmale wie z. B. Frontscheinwerfer, Rückfahrleuchten, Außenspiegel erkannt werden, wobei deren Abstand voneinander in einem von der Kamera aufgenommenen Bild ermittelt wird.

Erfindungsgemäß wird eine Länge, insbesondere ein Abstand oder auch eine Abmessung eines Merkmals (z. B. die Länge eines Nummernschildes) berechnet, welche von einem der erkannten Merkmale abhängt, wobei aus der Länge und einem gespeicherten Wert zu diesem Merkmal, welcher auch auf die Länge bezogen sein kann, die Position berechnet wird. Dabei erfolgt die Berechnung insbesondere unter Verwendung eines Weltkoordinatensystem, wobei insbesondere das Weltkoordinatensystem durch eine Position einer Primärspule einer Ladeeinrichtung bzw. eines Lademoduls für das Fahrzeug bestimmt ist.

In einer Ausgestaltung des Verfahrens zur Positionierung wird zur Berechnung der Position zumindest eines Merkmals des Fahrzeuges und/oder der Position des Fahrzeuges ein Wert für eine Brennweite der Kamera verwendet. Die Positionsberechnung ist also von der verwendeten Kamera abhängig. Vorteilhaft kann eine Recheneinheit für verschieden Kameras unterschiedlichen Typs eingesetzt werden, indem zur Positionsbestimmung der Wert für die Brennweite der Kamera in einer Rechenformel abgeändert werden kann. Ist die Brennweite ein einstellbarer veränderbarer Parameter, so kann auch im Falle eines Austausches einer Kamera wegen Defekts eine andere Kamera unterschiedlichen Typs bzw. Brennweite eingesetzt werden.

In einer Ausgestaltung des Verfahrens zur Positionierung wird aus einer Istposition des Fahrzeuges und einer Sollposition des Fahrzeuges eine Fahranweisung erzeugt, wobei insbesondere die Fahranweisung mittels einer Mensch-Maschine-Schnittstelle dargestellt wird. Die Fahranweisung betrifft die zur Optimierung der Position notwendigen Fahrbewegungen des Fahrzeuges. Die Fahranweisung kann auch direkt an ein Fahrerassistenzsystem übertragen werden, welches automatisch das Fahrzeug fährt. Dieses Fahrerassistenzsystem kann beispielsweise auch als automatischer Parkassistent verwendet werden.

Beim induktiven Laden von Fahrzeugen kann nicht ausgeschlossen werden, dass ein Fremdkörper zwischen Fahrzeugboden und das am Boden befindliche, insbesondere eingelassene, Lademodul gelangt. Beispielhaft seien folgende Fremdkörper genannt: Münzen, Getränkedosen, Kaugummipapier. Dieses Problem führt zu Funktions- und Sicherheitseinschränkungen. Aus diesem Grund werden vorteilhaft über eine Sensorik relevante Fremdkörper erkannt. Dies erfolgt beispielsweise mittels einer induktiven Sensorik. Damit können magnetische Fremdkörper wie Aluminiumpapier, Geldstücke etc. detektiert werden. Hierzu wird z. B. über die Fläche einer Induktionsspule eine weitere Sensorspule sowohl auf der Primär- als auch auf der Sekundärseite angebracht. Diese Messspule wird mit eine hochfrequenten Wechselspannung betrieben, um einen hinreichenden Frequenzabstand zu den Oberwellen des eigentlichen Energiefeldes zu gewährleisten. Das Messfeld dient dazu, magnetische Fremdteile im Energiefeld zu detektieren.

In einer weiteren Ausgestaltung basiert die Sensorik auf Transienten im Strom, welche über eine Spektralanalyse erkannt werden und zur Detektion eines Fremdkörpers im Energiefeld dienen.

Bei einer hochfrequenzbasierten Sensorik mit einem HF betriebenen induktiven Sensor können beispielsweise zwei Sensorplatten verwendet werden, wobei eine an der Ladestation und die andere am Fahrzeug integriert werden. Die Spulenanordnung ist derart, dass möglichst kleine metallische Teile (z. B. Cent-Münzen) das HF-Feld stören, wodurch eine Fremdkörperdetektion ermöglicht ist. Die Betriebsfrequenz des HF-Feldes ist derart hoch zu wählen, dass Oberwellen des Leistungsfeldes diese möglichst nicht beeinflussen.

Das Vorhandensein eines Fremdkörpers kann auf einem HMI angezeigt werden.

Die Erfindung ist beispielhaft an Hand von Figuren beschrieben. Dabei zeigt:

FIG 1    ein Anfahren eines Fahrzeuges an ein Lademodul;
FIG 2    ein Laden eines Fahrzeuges;
FIG 3    ein aufgenommenes Bild eines Fahrzeuges;
FIG 4    eine Mensch-Maschine-Schnittstelle;
FIG 5    einen Abgleich von Merkmalen eines Fahrzeuges;
FIG 6    graphisch einen Berechnungsansatz zur Positionsbestimmung;
FIG 7    ein Positionierungssystem; und
FIG 8    mögliche Koordinatensysteme zur Positionsbestimmung.

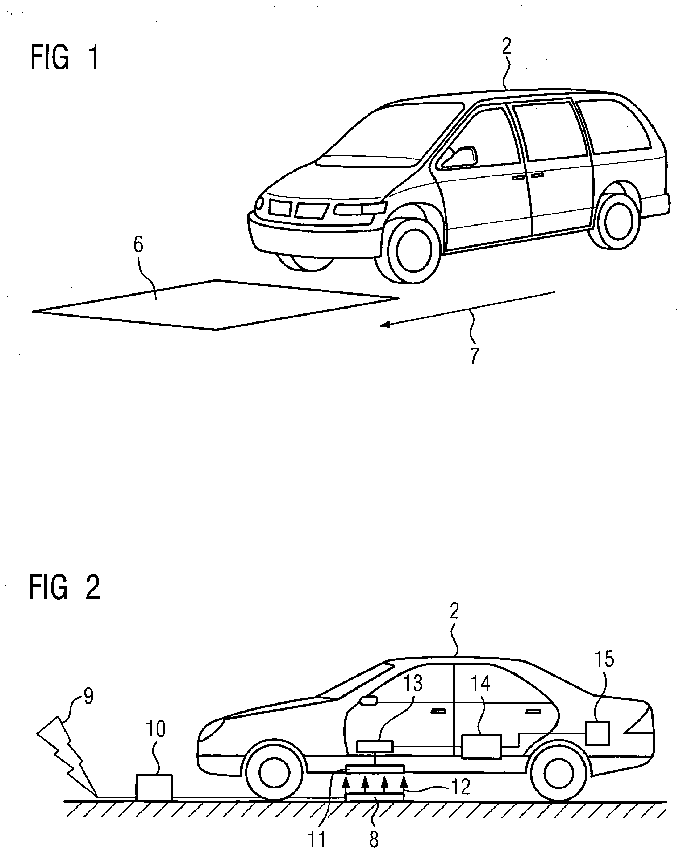

Die Darstellung gemäß Figur 1 zeigt ein Fahrzeug 2, welches zum Aufladen eines elektrischen Energiespeichers ein Lademodul 6 gemäß einer Navigationsrichtung 7 anfährt. Zur Positionierung des Fahrzeuges gibt es verschiedene Lösungsansätze. Beispielsweise kann eine Fahrbahnoberfläche Mulden aufweisen, die das Fahrzeug in die bevorzugte Position zwingen und halten. Auch mehrere Spulen auf der Bodenseite können als Lösungsansatz verwendet werden. Dies erfordert allerdings erhöhte bauliche Maßnahmen sowie Kosten. Auch Ultraschallsensoren zur Abstandserkennung am Fahrzeug können zur Unterstützung der Positionierung benutzt werden (Parkassistent). Dabei muss allerdings ein Gegenstand vor dem Fahrzeug die Möglichkeit einer Abstandsmessung gewährleisten. Dies ist in einer Garage gegeben, aber auf einer freien Parkfläche oder Carport nicht möglich. Zudem ist mit der Abstandsmessung zu einem Gegenstand hin eine Längspositionierung, aber keine Querpositionierung möglich. Werden jedoch in einer Garage Gegenstände, wie z. B. Reifen gelagert, so ist die Ultraschallsensorik zwar in der Lage den Abstand zu diesen Hindernissen zu detektieren, nicht jedoch die absolute Position in Bezug auf die Garage und somit in Bezug auf die Ladestation. Auch kann über eine Feldverteilung von z. B. 5 Sendespulen in dem fahrzeugseitigen Spulensystem durch eine Messung der Feldverteilung durch eine Empfangsspule in dem bodenseitigen Spulensystem die Position erkannt werden. Allerdings lässt diese Nahfelderkennung keine Möglichkeit mehr offen, Einfluss auf die Fahrzeugpositionierung beim Anfahren an die Ladestation zunehmen. Diese Varianten der Positionierung sind in Figur 1 allerdings nicht dargestellt.

Die Darstellung gemäß Figur 2 zeigt ein Laden eines Fahrzeuges 2. Bei induktiven Ladesystemen erfolgt keine mechanische Verbindung vom Bordladegerät zum Stromnetz. Die Energieübertragung erfolgt über den Luftspalt 12 eines Spulensystems, dessen Abstand bis zu 20 cm betragen kann. Im Allgemeinen befindet sich dazu eine Primärspule 8 am Boden. Die zweite Spule, die Sekundärspule 11 befindet sich an der Unterseite des Fahrzeuges 2. Beide, üblicherweise gleichgroßen Spulen, haben dabei einen Durchmesser von bis zu 60 cm. Wird die bodenseitige Spule 8 mit einer Wechselspannung bestromt, bildet sich zwischen dem Spulenpaar 8 und 11 ein magnetisches Feld aus, über das die Energie vom Stromnetz 9 über ein Leistungsteil 10 in das Fahrzeug 2 übertragen wird. Im Fahrzeug 2 erfolgt die Energieübertragung über einen Gleichrichter 13, einen DC/DC-Wandler 14 zu einem Energiespeicher 15, der Batterie.

Dies bietet einen wesentlichen Komfortgewinn und erhöht die Verfügbarkeit von Elektrofahrzeugen wesentlich, da der Ladevorgang des Energiespeicher auch automatisch, ohne aktives Zutun des Fahrers erfolgen kann. Solange sich die beiden Spulen 8 und 11 des Ladesystems direkt gegenüber stehen, ist der Wirkungsgrad über 90 %. Werden die beiden Spulen nicht übereinander positioniert, sondern haben einen Versatz von beispielsweise mehr als 10 cm, geht der Wirkungsgrad deutlich zurück. Die Herausforderung besteht darin, das Fahrzeug beim Abstellen möglichst genau so zu positionieren, dass sich möglichst beide Spulen gegenüber stehen.

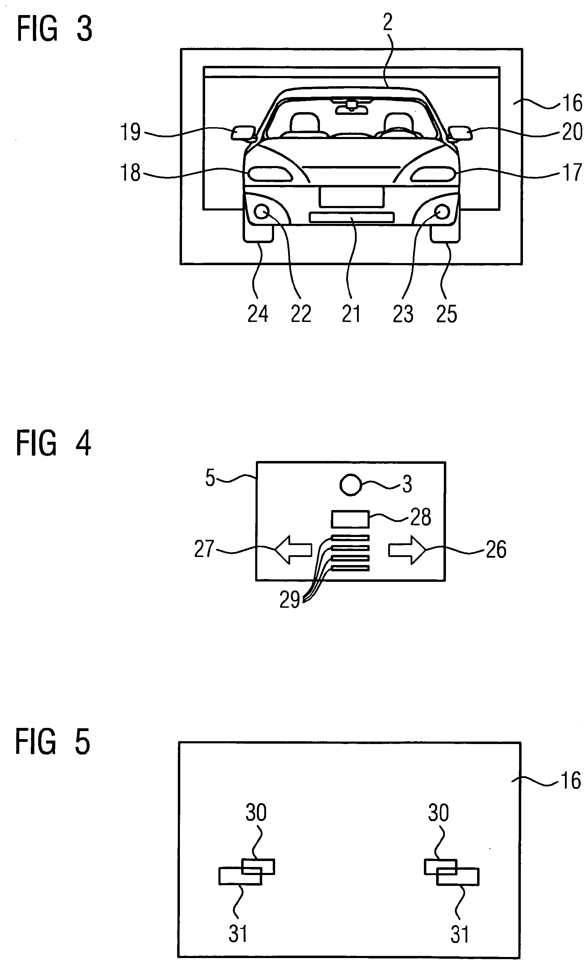

Die Darstellung gemäß Figur 3 zeigt ein von einer Kamera aufgenommenes Bild 16 eines Fahrzeuges 2. Eine hinreichend genaue optische Erfassung des Fahrzeuges 2 insbesondere in einem Garagenumfeld kann mit einer Vielzahl von Herausforderungen verbunden sein. Das Fahrzeug weist große weitgehend strukturlose und unterschiedlich reflektierende Oberflächen auf. Dadurch kann es zu Fehlmessungen mit einem optischen Sensor (Kamera) kommen. Der optische Sensor ist in seinem Dynamikumfang begrenzt und für sich stark ändernde Lichtverhältnisse gegebenenfalls nur bedingt geeignet. Die Blende ist bei einfachen Kameras normalerweise nur manuell mechanisch konfigurierbar. Des Weiteren sind Fahrzeugtypen unterschiedlicher Bauweise zu berücksichtigen. Ein weiteres mögliches Störpotential sind sich vor dem Fahrzeug bewegende Fußgänger beim Befahren der Ladestation.

Eine Ermittlung der Position und Orientierung des Fahrzeugs zum Messsystem bzw. zum Lademodul und damit zur Welt, wird durch eine Detektion markanter Punkte am Fahrzeug, wie z. B. Scheinwerfer, Räder, Nummernschild usw., durchgeführt. Für die Bestimmung absoluter Maßzahlen (Abstände, Breiten, ...) mit einer Kamera wird eine Referenzgröße am Fahrzeug benötigt, wie z. B. der Abstand der Scheinwerfer, Abstand der Räder oder die Größe des Nummernschildes. Diese Information kann z. B. mittels eines Kalibriertargets (Objekt von bekannter Abmessung) aus den Bilddaten extrahiert werden. In einer weiteren Ausführungsform können die entsprechenden Daten auch aus einer Datenbank, also dem Datenspeicher bezogen werden.

Auf dem Bild 16 sind verschiedene markante Merkmale des Fahrzeuges 2 abgebildet:

- ein rechter Außenspiegel 19;
- ein linker Außenspiegel 20;
- ein rechter Scheinwerfer 18;
- ein linker Scheinwerfer 17;
- ein rechter Nebelscheinwerfer 22;
- ein linker Nebelscheinwerfer 23;
- ein rechter Vorderreifen 24;
- ein linker Vorderreifen 25; und
- ein Nummernschild 19.

Durch das Bild 16 lässt sich der Abstand zwischen gleichen Merkmalen (z. B. Nebelscheinwerfer) aber auch zwischen unterschiedlichen Merkmalen (z. B. rechter Außenspiegel 19 und linker Nebelscheinwerfer 23) ermitteln.

Dieser Wert kann über den Strahlensatz und gespeicherte Werte zu diesem jeweiligen Abstand zur Positionsberechnung verwendet werden. Dabei erfolgt die Positionsbestimmung also basierend auf einem optischen System, welches mit Hilfe eines externen Kamerasystems die absolute Position des Fahrzeuges in der Garage detektiert und auf diese Art und Weise dem Fahrer über ein Display bzw. Leuchtzeichen (siehe Figur 4) Hinweise zur zielgenauen Positionierung des Fahrzeuges gibt. Das Fahrzeug fährt zum Zwecke des "Induktiven Ladens" eine bestimmte Position (x,y innerhalb eines abgegrenzten Bereiches, z. B. Garage) an. Diese Position, festgelegt durch ein am Boden befindliches Lademodul, ist als statisch und dessen Lage als bekannt vorausgesetzt. Um die Position mit einer entsprechenden Genauigkeit anzufahren, wird der Fahrer über Soll- und Istposition informiert. Zur sensorgestützten Navigation des Fahrzeuges wird dessen aktuelle Position permanent mittels eines Kamerasystems gemessen.

Der Vorgang der Positionierung erfolgt derart, dass die bei der Kalibrierung vom System festgelegten markanten Merkmale im aktuellen Bild gesucht werden. Nach der Detektion dieser Merkmale wird durch eine Vermessung im Bild auf die tatsächliche Position im Weltkoordinatensystem geschlossen. Auf diese Art und Weise ist es möglich, die Fahrzeugposition in Bezug zur gewünschten Referenzposition (Ladestation) mit einer Genauigkeit im Zentimeterbereich zu bestimmen.

Die Darstellung gemäß Figur 4 zeigt eine Mensch-Maschine-Schnittstelle 5. Diese weist auch die Kamera 3 auf, sowie automatisch aktivierbare Richtungsanzeigen 26 und 27. Durch Balken 29 kann eine Bewegungsanzeige (insbesondere abhängig von einer vorgeschlagenen Geschwindigkeit zum Anfahren der Zielposition), wie auch eine Abstandsanzeige bezüglich der Zielposition realisiert sein. Ferner ist eine STOP-Anzeige 28 vorhanden, welche signalisiert, dass die Sollposition erreicht ist. Dem Fahrer können also mittels Leuchtanzeigen, einem Bildschirm oder auch akustischen Signalen Hinweise zu Lenkeinschlag (links/rechts) sowie Halteposition übermittelt werden.

Diese Schnittstelle zum Fahrer hat den Vorteil, dass sämtliche Fahrzeuge positioniert werden können, ohne dass diese über interne Fahrerassistenzsysteme verfügen müssten. In einer weiteren Ausführungsform ist es möglich, die ermittelte Fahrzeugpositionierung an das Fahrzeug zu übertragen (z. B. mittels Funktechnik) und die im Fahrzeug vorhandenen Anzeigeinstrumente in optischer oder auch akustischer Form als Human-Machine-Interface zu verwenden.

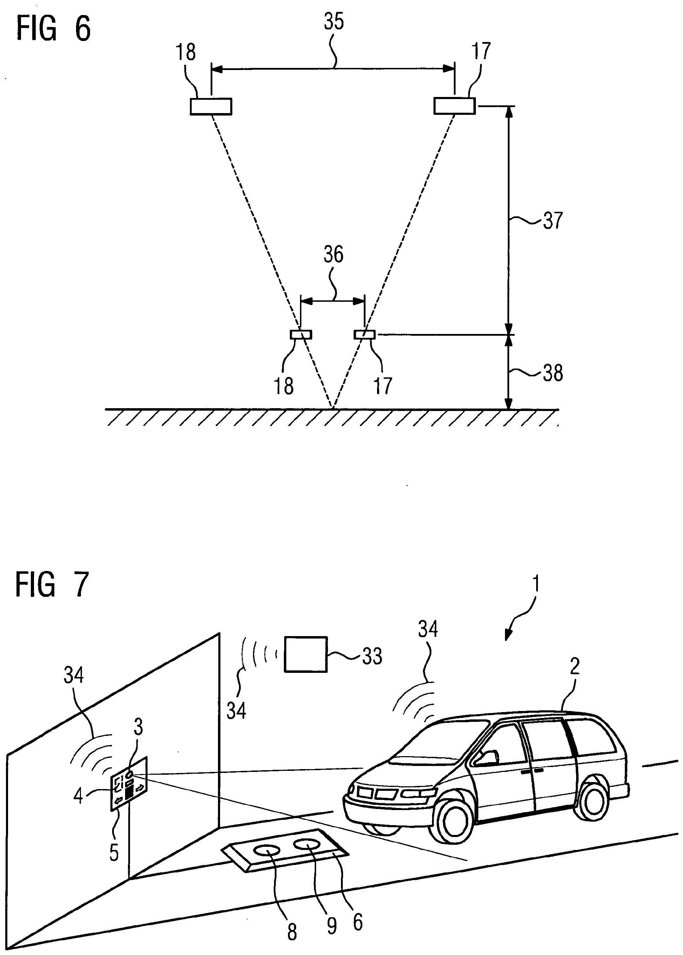

Die Darstellung gemäß Figur 5 zeigt ein Kamerabild in dem erkannte Merkmale 30 (Frontscheinwerfer) dargestellt sind und auch die Referenzposition 31 der Scheinwerfer eingeblendet ist. Die erkannten Merkmale 30 weisen voneinander einen geringeren Abstand auf, als die Referenzmerkmale 31. Hieraus lässt sich die Istposition des Fahrzeuges berechnen. Ein Grundgedanke dieser Berechnung soll in Figur 6 dargestellt sein.

Die Darstellung gemäß Figur 6 zeigt ein Strahlensystem. Dargestellt sind Scheinwerfer 17, 18. Ferner ist folgendes dargestellt:

- ein Abstand 37 zwischen Kamera und Fahrzeug;
- eine Brennweite 38 der Kamera;
- ein Abstand 35 der Merkmale 17 und 18; und
- ein Abstand 36 der Merkmale 17 und 18 auf dem von der Kamera aufgenommenen Bild.

Dabei wird davon ausgegangen, dass die Front des Fahrzeuges auf eine Sensorfläche der Kamera abgebildet wird. Hierbei entsteht ein Informationsverlust, da eine Abbildung von einem 3D-Raum auf eine 2D-Ebene stattfindet. Um die Position des Fahrzeuges im 3D-Raum bestimmen zu können, ist es demnach notwendig eine weitere Information zu kennen. Diese Information wird aus den gewählten markanten Merkmalen generiert, welche im Bild detektiert werden. Der Abstand dieser Merkmale im Bild wird berechnet. Dadurch, dass die Distanz zwischen den markanten Merkmalen im Weltkoordinatensystem sowie die Abbildungseigenschaften (insbesondere die Brennweite) des optischen Sensors bekannt sind, kann mithilfe des Strahlensatzes die genaue Distanz des Fahrzeuges zur Kamera bestimmt werden. Unter Berücksichtigung einer einmalig durchgeführten "extrinsischen Kalibrierung" kann so die genaue Position der Merkmale im Weltkoordinatensystem errechnet werden. Somit ergibt sich ein Rechenergebnis aus einer Triangulation. Der Abstand der Kamera zum Fahrzeug und somit die absolute Positionierung des Fahrzeuges kann berechnet werden. Grundlage hierfür bilden folgende Formeln:

$$1) \quad \frac{d_I}{f} = \frac{d_M}{d_{K-F} + f}$$

$$2) \quad d_I = \sqrt{\left(y_{I,\text{links}} - y_{I,\text{rechts}}\right)^2 + \left(x_{I,\text{links}} - x_{I,\text{rechts}}\right)^2}$$

mit:

- $d_I$ 36: Abstand auf dem Bild;

- f 38: Brennweite;
- $d_M$ 35 Abstand der Merkmale;
- $d_{K-F}$ 37: Abstand Kamera-Fahrzeug;
- $y_{I, links}$: y-Wert eines linken Merkmals;
- $y_{I, rechts}$: y-Wert eines rechten Merkmals;
- $x_{I, links}$: x-Wert des linken Merkmals; und
- $x_{I, rechts}$: x-Wert des rechten Merkmals.

Beim Positioniervorgang werden die erhaltenen 3D-Weltpunkte der Merkmale mit denen der Referenzweltpunkte abgeglichen, welche in einem einmaligen Kalibriervorgang, bei dem das Fahrzeug in optimaler Position eingeparkt wurde, berechnet wurden. Die Differenz der Punkte beschreibt die Richtung, in die das Fahrzeug vom Fahrer gefahren werden muss und kann diesem mitgeteilt werden.

Die Darstellung gemäß Figur 7 zeigt ein Positionierungssystem mit einem Fahrzeug 2 einem HMI 5 und einem Lademodul 6. Das HMI 5 weist die Kamera 3 und eine Rechnereinheit 4 zur Berechnung der Position des Fahrzeuges 2 und zur Direktionierung des Fahrzeuges auf. Hierfür weist das HMI optische Einrichtungen auf. Das HMI 5 kann über ein Funksignal 34 mit einem Datenspeicher 33 (insbesondere ein Server im Internet) Daten austauschen. In dem Datenspeicher 33 sind beispielsweise Referenzdaten zu Merkmalen eines Fahrzeuges gespeichert. Der Datenspeicher kann sich allerdings auch in der HMI Einheit selbst befinden. Auch das Fahrzeug selbst kann Referenzdaten über das Funksignal 34 übermitteln. Das optische Messsystem (die Kamera) befindet sich vor dem zu detektierenden Fahrzeug 2. Hierbei ist es unerheblich, ob das Fahrzeug vorwärts oder rückwärts die Ladestation anfährt. Der gesamte zu messende Anfahrtsweg liegt im Sichtbereich des statisch montierten Kamerasystems. Des Weiteren befindet sich die Ladestation im Sichtbereich des Kamerasystems. Die Ladestation mit dem Lademodul 6 und den darin befindlichen Primärspulen 8 und 9 definiert das so genannte Weltkoordinatensystem und damit die Referenz für alle Messungen. Die Position der Kamera 3 zur Ladestation wird mittels einmaliger "Extrinsischer Kalibrierung" vorgenommen. Damit ist die Position und Orientierung der Kamera zur Ladestation bekannt. Derart ist eine optische Positionierung des Fahrzeugs im cm-Genauigkeitsbereich möglich. Vorteilhaft ist die Erfassung des Fahrzeuges in einem 3D-Weltkoordinaten mit einer Monokamera im Rahmen einer Fahrzeugpositionierung, wobei es sich dabei insbesondere dann um eine robuste Fahrzeugpositionserfassung handelt, wenn zur Detektion die Scheinwerfer verwendet werden. Es ergibt sich ein zuverlässiger Einsatz auch unter stark wechselnden (Tag/Nacht) Lichtverhältnissen.

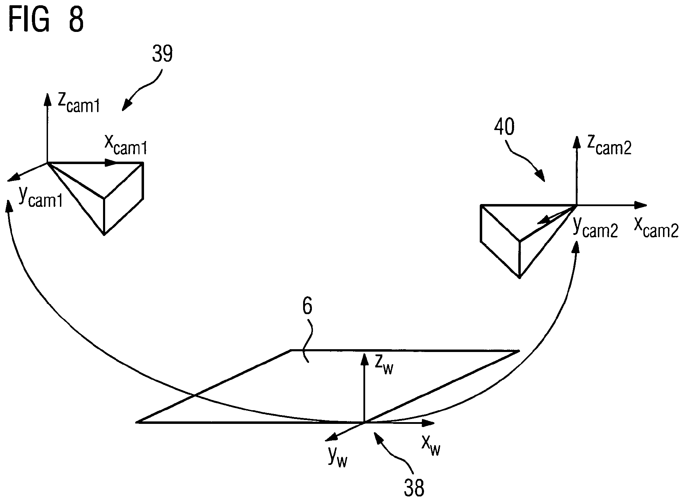

Die Darstellung gemäß Figur 8 zeigt mögliche Koordinatensysteme zur Positionsbestimmung, wobei ein Weltkoordinatensystem 38 und ein erstes Koordinatensystem 39 für eine erste Kamera und ein zweites Koordinatensystem 40 für eine zweite Kamera gezeigt wird. Die Koordinatensysteme der Kameras sind extrinsisch zu kalibrieren. Bei der Verwendung einer Monokamera gibt es dieses zweite Koordinatensystem 40 nicht, da die Monokamera nur eines, eben z. B. das erste Koordinatensystem 39 benötigt. Ein in einen Boden eingelassenes Lademodul stellt beispielsweise die Referenz für alle berechneten Positionen dar. Dies ist dann das Weltkoordinatensystem 38. Die Lokalisierung des Fahrzeuges erfolgt über die Kamera, wobei die Position der Kamera sowie ihre Orientierung zum Lademodul und damit zum Weltkoordinatensystem als statisch angenommen und über einmalige "Kalibrierung" messtechnisch ermittelt werden.

Auch die Position der Kamera kann als Weltkoordinatensystem verwendet werden.

## Patentansprüche

1. Positioniersystem (1) für das Laden eines Fahrzeugs (2), welches eine Kamera (3), eine Rechnereinheit (4) und einen Datenspeicher (33) aufweist, wobei in dem Datenspeicher (33) eine auf ein Merkmal (18, 19, 20, 21, 22, 23, 24, 25), nämlich einen Außenspiegel, einen Scheinwerfer, einen Frontscheinwerfer, einen Nebelscheinwerfer, einen Vorderreifen, eine Rückfahrleuchte oder ein Nummernschild, des Fahrzeuges (2) bezogene Information, insbesondere eine Längeninformation (35), gespeichert ist, **gekennzeichnet dadurch, dass** mit Hilfe eines von der Kamera (3) aufgenommenen Bilds nach einem Erkennen zumindest eines Merkmales (18, 19, 20, 21, 22, 23, 24, 25) des Fahrzeugs (2) eine Information auf Grundlage des erkannten Merkmals (18, 19, 20, 21, 22, 23, 24, 25) durch Berechnen einer Länge, welche von dem erkannten Merkmal (18, 19, 20, 21, 22, 23, 24, 25) abhängt, ermittelt wird und mit Hilfe der zum Fahrzeug (2) gespeicherten Information die Position des Fahrzeugs (2) berechnet wird.

2. Positioniersystem (1) nach Anspruch 1, wobei die Länge eine Abmessung des Merkmals (18, 19, 20, 21, 22, 23, 24, 25) ist.

3. Positioniersystem (1) nach Anspruch 1, wobei die Länge ein Abstand von zwei voneinander weit entfernten Merkmalen (18, 19, 20, 21, 22, 23, 24, 25), insbesondere von Frontscheinwerfern, Rückfahrleuchten oder Außenspiegeln, ist.

**4.** Positioniersystem (1) nach einem der vorhergehenden Ansprüche, wobei die Rechnereinheit (4) mit einer Mensch-Maschine-Schnittstelle (5) datentechnisch verbunden ist.

**5.** Positioniersystem (1) nach einem der vorhergehenden Ansprüche, wobei in dem Datenspeicher (33) eine Position einer ortsfesten Zieleinheit (8) gespeichert ist, wobei die ortsfeste Zieleinheit (8) eine Ladestation zum induktiven Laden eines Energiespeichers (15) eines Fahrzeugs (2) ist.

**6.** Verfahren zum Positionieren eines Fahrzeuges (2) für einen induktiven Ladevorgang, wobei das Fahrzeug (2) von einer Kamera (3) aufgenommen wird, wobei ein Merkmal (18, 19, 20, 21, 22, 23, 24, 25), nämlich ein Außenspiegel, ein Scheinwerfer, ein Frontscheinwerfer, ein Nebelscheinwerfer, ein Vorderreifen, eine Rückfahrleuchte oder ein Nummernschild, des Fahrzeugs (2) erkannt wird, gekennzeichnet dadurch, dass eine auf das Merkmal (18, 19, 20, 21, 22, 23, 24, 25) bezogene Position des Fahrzeugs (2) berechnet wird, wobei eine Länge (35) berechnet wird, welche von dem Merkmal (18, 19, 20, 21, 22, 23, 24, 25) abhängt, wobei aus der Länge (35) und einem gespeicherten Wert zu diesem Merkmal (18, 19, 20, 21, 22, 23, 24, 25) die Position berechnet wird.

**7.** Verfahren nach Anspruch 6, wobei die Länge eine Abmessung des Merkmals (18, 19, 20, 21, 22, 23, 24, 25) ist.

**8.** Verfahren nach Anspruch 6, wobei die Länge ein Abstand von zwei voneinander weit entfernten Merkmalen (18, 19, 20, 21, 22, 23, 24, 25), insbesondere von Frontscheinwerfern, Rückfahrleuchten oder Außenspiegeln, ist.

**9.** Verfahren nach einem der Ansprüche 6 bis 8, wobei zur Berechnung der Position ein Weltkoordinatensystem (38) verwendet wird, wobei insbesondere das Weltkoordinatensystem durch eine Position einer Primärspule (8) einer Ladeeinrichtung für das Fahrzeug (2) bestimmt ist.

**10.** Verfahren nach einem der Ansprüche 6 bis 9, wobei zur Berechnung der Position ein Wert für eine Brennweite der Kamera (3) verwendet wird.

**11.** Verfahren nach einem der Ansprüche 6 bis 10, wobei aus einer Istposition des Fahrzeuges (2) und einer Sollposition des Fahrzeuges (2) eine Fahranweisung erzeugt wird, wobei insbesondere die Fahranweisung mittels einer Mensch-Maschine-Schnittstelle (5) dargestellt wird.

**12.** Verfahren nach einem der Ansprüche 6 bis 11, wobei Fremdkörper im Bereich des Lademoduls (6) detektiert werden, wobei die Detektion insbesondere mittels eines induktiven Verfahrens erfolgt.

**13.** Verfahren nach einem der Ansprüche 6 bis 12, wobei der Typ des Fahrzeuges und/oder das individuelle Fahrzeug selbst erkannt wird und zu diesem Fahrzeug (2) hinterlegte Daten zur Berechnung der Position des Fahrzeuges verwendet werden.

**14.** Verfahren nach einem der Ansprüche 6 bis 13, wobei die Kamera (3) extrinsisch kalibriert wird oder extrinsisch kalibriert ist.

**Claims**

**1.** A positioning system (1) for charging a vehicle (2), which has a camera (3), a computer unit (4) and a data memory (33), wherein in the data memory (33) an information, relating to a feature (18, 19, 20, 21, 22, 23, 24, 25) of the vehicle (2), namely an exterior mirror, a headlight, a front headlight, a fog light, a front tire, a reversing light or a license plate, in particular a length information (35) is stored, **characterized in that**
with the aid of an image recorded by the camera (3), after at least one feature (18, 19, 20, 21, 22, 23, 24, 25) of the vehicle (2) has been detected, an information is determined on the basis of the detected feature (18, 19, 20, 21, 22, 23, 24, 25) by calculating a length which depends on the detected feature (18, 19, 20, 21, 22, 23, 24, 25), and with the aid of the information stored for the vehicle (2), the position of the vehicle (2) is calculated.

**2.** Positioning system (1) according to claim 1, wherein the length is a dimension of the feature (18, 19, 20, 21, 22, 23, 24, 25).

3. Positioning system (1) according to claim 1, wherein the length is a distance between two features (18, 19, 20, 21, 22, 23, 24, 25) that are far apart from each other, in particular a distance between front headlights, reversing lights or exterior mirrors.

4. Positioning system (1) according to any one of the preceding claims, wherein the computer unit (4) is data-connected to a man-machine interface (5).

5. Positioning system (1) according to any one of the preceding claims, wherein a position of a stationary target unit (8) is stored in the data memory (33), wherein the stationary target unit (8) is a charging station for inductively charging an energy storage device (15) of a vehicle (2).

6. Method for positionning a vehicle (2) for an inductive charging process, wherein the vehicle (2) is recorded by a camera (3), wherein a feature (18, 19, 20, 21, 22, 23, 24, 25), namely an exterior mirror, a headlight, a front headlight, a fog light, a front tire, a reversing light or a license plate of the vehicle (2) is detected,
**characterized in that**
a position of the vehicle (2) related to the feature (18, 19, 20, 21, 22, 23, 24, 25) is calculated, wherein a length (35) is calculated which depends on the feature (18, 19, 20, 21, 22, 23, 24, 25), wherein the position is calculated from the length (35) and a stored value for this feature (18, 19, 20, 21, 22, 23, 24, 25).

7. Method of claim 6, wherein the length is a dimension of the feature (18, 19, 20, 21, 22, 23, 24, 25).

8. Method according to claim 6, wherein the length is a distance between two features (18, 19, 20, 21, 22, 23, 24, 25) that are far apart from each other, in particular a distance between front headlights, rear lights or exterior mirrors.

9. Method according to any one of claims 6 to 8, wherein a world coordinate system (38) is used to calculate the position, wherein in particular the world coordinate system is determined by a position of a primary coil (8) of a charging device for the vehicle (2).

10. Method according to any one of claims 6 to 9, wherein a value for a focal length of the camera (3) is used to calculate the position.

11. Method according to any one of claims 6 to 10, wherein a driving instruction is generated from an actual position of the vehicle (2) and a desired position of the vehicle (2), wherein in particular the driving instruction is displayed by means of a man-machine interface (5).

12. Method according to one of claims 6 to 11, wherein foreign bodies are detected in the region of the loading module (6), wherein the detection is carried out in particular by means of an inductive method.

13. Method according to one of claims 6 to 12, wherein the type of vehicle and/or the individual vehicle itself is recognized and data stored for this vehicle (2) is used to calculate the position of the vehicle.

14. Method according to any one of claims 6 to 13, wherein the camera (3) has been calibrated extrinsically or is calibrated extrinsically.

**Revendications**

1. Système de positionnement (1) pour la charge d'un véhicule (2) qui comporte une caméra (3), une unité ordinateur (4) et une mémoire de données (33), en ce que dans la mémoire de données (33) une information liée à une caractéristique (18, 19, 20, 21, 22, 23, 24, 25), notamment à un rétroviseur extérieur, un phare, un phare avant, un phare antibrouillard, un pneu avant, un feu de marche arrière ou une plaque minéralogique, du véhicule (2), en particulier une information de longueur (35), est mémorisée, **caractérisé en ce qu'**à l'aide d'une image prise par la caméra (3) après détection d'au moins une caractéristique (18, 19, 20, 21, 22, 23, 24, 25) du véhicule (2) une information sur la base de la caractéristique (18, 19, 20, 21, 22, 23, 24, 25) identifiée est déterminée par calcul d'une longueur, laquelle dépend de la caractéristique identifiée (18, 19, 20, 21, 22, 23, 24, 25), et la position du véhicule (2) est calculée à l'aide de l'information mémorisée liée au véhicule (2).

2. Système de positionnement (1) selon la revendication 1, en ce que la longueur est une dimension de la caractéristique (18, 19, 20, 21, 22, 23, 24, 25).

3. Système de positionnement (1) selon la revendication 1, en ce que la longueur est une distance entre deux caractéristiques (18, 19, 20, 21, 22, 23, 24, 25) éloignées les unes des autres, en particulier des phares avant, des feux de marche arrière ou des rétroviseurs extérieurs.

4. Système de positionnement (1) selon l'une des revendications précédentes, en ce que l'unité ordinateur (4) est reliée du point de vue informatique à une interface homme-machine (5).

5. Système de positionnement (1) selon l'une des revendications précédentes, en ce qu'une position d'une unité cible stationnaire (8) est mémorisée dans la mémoire de données (33), en ce que l'unité cible stationnaire (8) est une station de charge pour la charge inductive d'un accumulateur d'énergie (15) d'un véhicule (2).

6. Procédé de positionnement d'un véhicule (2) pour un processus de charge inductive, en ce que le véhicule (2) est enregistré par une caméra (3), en ce qu'une caractéristique (18, 19, 20, 21, 22, 23, 24, 25), notamment un rétroviseur extérieur, un phare, un phare avant, un phare antibrouillard, un pneu avant, un feu de marche arrière ou une plaque minéralogique, du véhicule (2) est détectée, **caractérisé en ce qu'**une position du véhicule (2) liée à la caractéristique (18, 19, 20, 21, 22, 23, 24, 25) est calculée, **en ce qu'**une longueur (35) est calculée, laquelle dépend de la caractéristique (18, 19, 20, 21, 22, 23, 24, 25), **en ce que** la position est calculée à partir de la longueur (35) et d'une valeur mémorisée liée à cette caractéristique (18, 19, 20, 21, 22, 23, 24, 25).

7. Procédé selon la revendication 6, en ce que la longueur est une dimension de la caractéristique (18, 19, 20, 21, 22, 23, 24, 25).

8. Procédé selon la revendication 6, en ce que la longueur est une distance entre deux caractéristiques (18, 19, 20, 21, 22, 23, 24, 25) éloignées les unes des autres, en particulier des phares avant, des feux de marche arrière ou des rétroviseurs extérieurs.

9. Procédé selon l'une des revendications 6 à 8, en ce qu'un système de coordonnées mondial (38) est utilisé pour le calcul de la position, en ce qu'en particulier le système de coordonnées mondial est déterminé par une position d'une bobine primaire (8) d'un dispositif de charge pour le véhicule (2).

10. Procédé selon l'une des revendications 6 à 9, en ce qu'une valeur pour une distance focale de la caméra (3) est utilisée pour le calcul de la position.

11. Procédé selon l'une des revendications 6 à 10, en ce qu'une instruction de conduite est générée à partir d'une position réelle du véhicule (2) et d'une position de consigne du véhicule (2), en ce qu'en particulier l'instruction de conduite est représentée au moyen d'une interface homme-machine (5).

12. Procédé selon l'une des revendications 6 à 11, en ce que des corps ou éléments étrangers dans la zone du module de charge (6) sont détectés, en ce que la détection s'effectue en particulier au moyen d'un procédé inductif.

13. Procédé selon l'une des revendications 6 à 12, en ce que le type du véhicule et/ou le véhicule individuel lui-même est identifié et des données enregistrées pour ce véhicule (2) sont utilisées pour le calcul de la position du véhicule.

14. Procédé selon l'une des revendications 6 à 13, en ce que le calibrage de la caméra (3) se fait de manière extrinsèque ou en ce que la caméra est calibrée de manière extrinsèque.

FIG 1

FIG 2

FIG 3

FIG 4

FIG 5

FIG 6

FIG 7

# FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011005386 A1
- DE 4009668 A1
- US 20120095617 A1
- DE 102011111051 A1
- US 8169186 B1
- DE 102011109834 A1
- US 20100235006 A1
- WO 2011116874 A2